# FASCICULE DE BREVET EUROPEEN

(11) **EP 2 341 363 B1**
(45) Date de publication et mention de la délivrance du brevet: **11.09.2013**
(21) Numéro de dépôt: 10196653.9
(22) Date de dépôt: 22.12.2010
(51) Int. Cl.: G01S 7/40, G01S 13/75

(54) **Système de réponse à un signal émis par un radar et utilisation de ce système notamment pour tester les radars, en particulier de type MTI**
Antwortsystem auf ein von einem Radar ausgesendetes Signal, und Einsatz dieses Systems insbesondere für Tests von Radaren, hauptsächlich vom Typ MTI
System for responding to a signal emitted by a radar and use of said system mainly for testing radars, in particular MTI radars

(30) Priorité: 23.12.2009 FR 0906290
(43) Date de publication de la demande: 06.07.2011
(73) Titulaire: Thales, 92200 Neuilly Sur Seine (FR)
(72) Inventeur: Lefauvre, Régis, 22140 Cavan (FR); Cornic, Pascal, 29820 Guilers (FR)
(74) Mandataire: Lucas, Laurent Jacques

(56) Documents cités:
- WO-A1-2007/136308
- GB-A- 924 208
- US-A- 3 573 826
- US-B1- 6 628 239

## Description

L'invention porte sur les systèmes de réponse à un signal émis par un radar, utilisés en particulier avec les radars de type MTI (pour « Moving Target Indicator » en langue anglaise). Ces derniers sont aptes à détecter des échos par un traitement Doppler classique.

Les systèmes concernés sont de type répondeur, c'est-à-dire aptes à répondre à un signal émis (ici par le radar MTI). Ils sont par exemple utilisés au sein de balises de localisation référençant les distances.

Plus généralement, ces systèmes sont embarqués à bord de cibles coopératives, par exemple un aéroporteur. Elles servent ainsi à aider l'aéroporteur pour un appontage. Le radar en communiquant avec le système de réponse peut connaitre sa position et alors le guider.

Classiquement, ces systèmes « répondeurs » sont de type actif avec une génération de signaux de type hyperfréquence, et une synchronisation avec les signaux émis par le radar.

Ces systèmes sont complexes et onéreux, car basés sur la réémission d'un signal hyperfréquence, après un retard temporel et une transposition par modulation fréquentielle de celui-ci. Toutes ces opérations impliquent un nombre conséquent de composants.

En outre, ces systèmes, particulièrement consommateur en énergie, nécessitent généralement une alimentation de type secteur. Cela peut rendre difficile une utilisation sur un terrain opérationnel. Dans le cas où l'alimentation s'effectue par batterie, la consommation d'énergie des éléments actifs en limite l'autonomie.

Par ailleurs, la présence d'oscillateurs actifs rend ces systèmes de réponse détectables, ce qui peut être gênant pour certaines applications.

Dans le cas d'un embarquement à bord d'un aéronef où le volume, la masse et la consommation sur le réseau de bord doivent être limités au maximum, ces systèmes sont pénalisants.

Enfin, ces derniers nécessitent une maintenance régulière.

Un document US 6 628 239 B1 divulgue un système de réponse à un signal émis par un radar.

Un but de l'invention est notamment de résoudre les problèmes énoncés ci-avant.

A cet effet, selon un premier aspect de l'invention, il est proposé un système de réponse à un signal émis par un radar.

Selon une caractéristique générale de cet aspect, il comprend :
- une antenne passive apte à recevoir puis à rétrodiffuser un signal émis par ledit radar,
- un commutateur de type hyperfréquence relié à ladite antenne,
- au moins deux lignes hyperfréquences chacune ayant une impédance distincte et étant connectée au commutateur hyperfréquence, et
- un générateur apte à générer un signal de pilotage paramétrable, au commutateur hyperfréquence pour qu'il commute sur l'une ou l'autre des lignes hyperfréquences, de façon à moduler le signal rétrodiffusé par ladite antenne, deux lignes hyperfréquences successive ayant une différence de longueur égale à λ/2, λ étant la longueur d'onde du signal reçu par l'antenne.

En d'autres termes, cet aspect de l'invention propose de réaliser un système de réponse avec une antenne passive et un moyen de désadaptation d'impédance formé à l'aide de lignes hyperfréquences. Cela permet de créer un écho radar par variation temporelle de la surface équivalente de l'antenne, avec une fréquence de modulation d'amplitude ajustable et éventuellement une phase de modulation ajustable.

Ce système présente de nombreux avantages par rapports aux systèmes répondeurs existants, notamment :
- un coût de réalisation très faible,
- pas de liaison physique avec le radar (système autonome),
- pas d'électronique complexe à mettre en oeuvre pour sa réalisation,
- peu fragile (et donc utilisable sur les sites exposés),
- système passif : pas d'émission, pas de rayonnement d'ondes locales,
- large domaine d'utilisation,
- Très faible consommation d'énergie (et donc grande autonomie), et
- facilité d'intégration sur tous types de porteur.

De préférence, le système comprend deux lignes hyperfréquences.

Selon un mode de réalisation, le générateur peut être apte à piloter le commutateur en fonction d'un code prédéfini.

Selon un mode de réalisation, le générateur peut être apte à piloter le commutateur dynamiquement.

Selon un deuxième aspect de l'invention, il est proposé une utilisation d'un système tel que mentionné ci-avant, au sein d'une cible aéroportée coopérant avec ledit radar.

En variante, il est aussi proposé une utilisation d'un système tel que mentionné ci-avant pour calibrer ledit radar.

En variante, il est aussi proposé une utilisation d'un système tel que mentionné ci-avant, au sein de balises de localisation.

D'autres avantages et caractéristiques de l'invention apparaîtront à l'examen de la description détaillée de modes de réalisation de l'invention, nullement limitatifs, et des dessins annexés sur lesquels :
- la figure 1 illustre un mode d'utilisation de l'invention,
- la figure 2 représente un mode de réalisation du système de réponse selon l'invention,
- la figure 3 représente la variation de la surface équivalente radar de l'antenne du système de réponse selon l'invention, et
- la figure 4 représente le spectre de modulation d'amplitude correspondant.

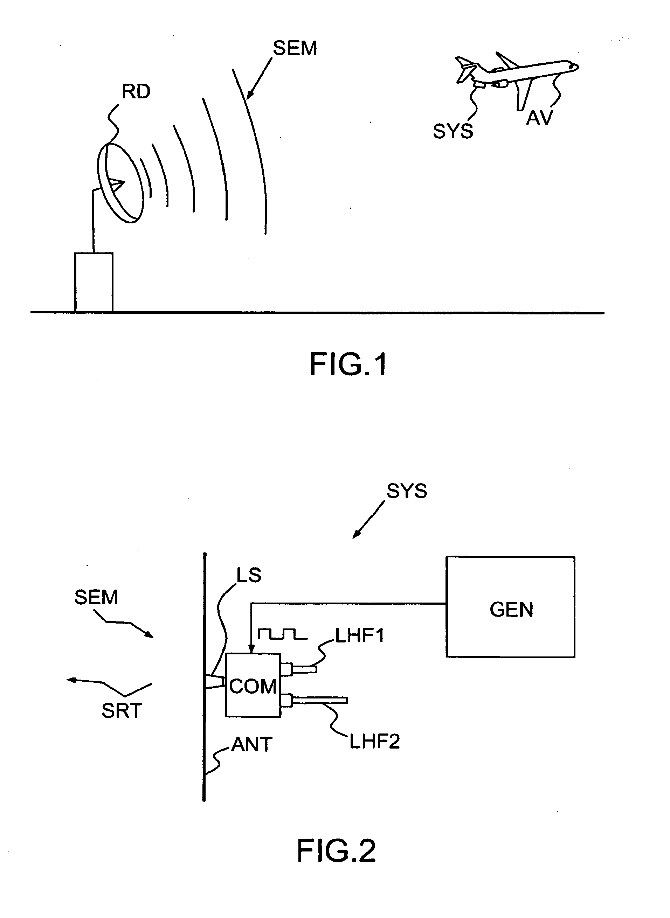

On se réfère à la figure 1. Sur cette figure est représenté un radar RD ici de type MTI émettant un signal SEM vers un aéroporteur, ici un avion AV. Cet avion AV embarque à bord un système de réponse SYS. Ce dernier va recevoir puis rétrodiffuser un signal ou écho fonction du signal émis SEM, vers le radar RD.

Sur la figure 2 est décrit plus en détail un mode de réalisation du système SYS.

Celui-ci comprend une antenne passive ANT apte à recevoir un signal SEM, par exemple émis par un radar MTI, et à rétrodiffuser un signal SRT en réponse. Ce dernier est issu du traitement effectué sur le signal reçu SEM.

Le signal reçu SEM par l'antenne ANT est transmis vers un commutateur hyperfréquence COM par l'intermédiaire d'une liaison LS. Ce commutateur COM est couplé à deux lignes hyperfréquences LHF1 et LHF2, dont les longueurs sont notamment fonction du radar avec lequel le système SYS communique. Bien entendu, plus généralement le commutateur hyperfréquence COM peut être couplé à N lignes hyperfréquences, N étant un entier supérieur ou égal à 2. Ces lignes hyperfréquence sont choisies avec des impédances distinctes.

Dans cet exemple, les lignes hyperfréquences ont une différence de λ/2, λ étant la longueur d'onde du signal reçu SEM. Ainsi, l'impédance de la première ligne hyperfréquence LHF1 est de 50Q (charge adaptée), tandis que l'impédance de la deuxième ligne hyperfréquence LHF2 est infinie (court-circuit).

Le commutateur COM connecte l'antenne ANT alternativement à la première puis à la deuxième ligne hyperfréquence modulant ainsi la surface équivalente de l'antenne ANT et par conséquent l'amplitude du signal rétrodiffusé SRT par le système SYS vers le radar, comme expliqué plus en détail ci-après.

Lorsque le commutateur hyperfréquence COM connecte l'antenne ANT à la première ligne hyperfréquence LHF1 alors qu'elle est illuminée par un radar à une fréquence correspondant à son domaine de fonctionnement, l'essentiel de l'énergie captée par l'antenne ANT est alors transmise à la charge LHF1 et la surface équivalente de l'antenne vue du radar émetteur du signal SEM, est quasiment nulle.

A l'inverse, lorsque le commutateur hyperfréquence COM connecte l'antenne ANT à la deuxième ligne hyperfréquence LHF2, l'énergie alors captée par la charge LHF2 est retransmise à l'antenne ANT. La surface équivalente radar dite (« SER ») de l'antenne ANT, vue du radar émetteur du signal SEM qui l'illumine, est égale à la surface de l'antenne ANT multipliée par son gain à la fréquence considérée.

Le commutateur COM est commandé par un générateur GEN. Le signal de commande peut être par exemple un signal carré de rapport cyclique 1 :1. A chaque front de la commande du générateur GEN, le commutateur commute d'une ligne hyperfréquence à l'autre. Cette oscillation entre les deux lignes hyperfréquences induit une modulation en amplitude du signal rétrodiffusé SRT.

Cette modulation d'amplitude peut être également rendue trapézoïdale ou quasi sinusoïdale en filtrant à l'aide un filtre passe-bas connecté en sortie du générateur GEN, la commande du commutateur hyperfréquence COM. On contrôle ainsi le niveau des harmoniques dans le spectre de modulation.

La modulation en amplitude peut aussi être réalisée sur plusieurs états, si comme indiqué ci-avant, le commutateur hyperfréquence COM possède plusieurs voies connectées à différentes valeurs de charges.

Suivant le même principe, il est également possible d'ajuster les composantes imaginaires des impédances des lignes hyperfréquences pour réaliser une modulation de phase du signal rétrodiffusé SRT.

Enfin, il est possible de générer dynamiquement sur ce principe des codes de modulation quelconques, capable de transmettre des informations en direction de la source éclairante (par exemple un radar MTI), de façon discrète. Ce dernier principe permet par exemple d'utiliser le système SYS pour la différenciation de porteurs par empreinte (« fingerprint » en langue anglaise).

On note qu'il existe plusieurs possibilités pour réaliser le système SYS. Les solutions pour réaliser le répondeur sont nombreuses :
L'antenne ANT peut être une antenne dite « patch » imprimée. Par ailleurs, tous les types d'antennes passives peuvent convenir pour réaliser l'antenne ANT.

La liaison LS entre l'antenne ANT et le commutateur COM, ainsi que les lignes hyperfréquences peuvent être réalisées en utilisant un câble coaxial hyperfréquence.

Le commutateur hyperfréquence COM peut être de type modulable et être réalisé sur circuit imprimé (lignes microstrip), de même que les lignes hyperfréquences.

La réalisation la plus compacte et la plus légère est obtenue en associant sur un même circuit :
- l'antenne ANT de type patch imprimée,
- le commutateur hyperfréquence COM et les lignes hyperfréquences en technologie dite « microstrip », et
- le générateur GEN en technologie CMS classique (CMS signifiant « Composants Montés en Surface »), bien connue de l'homme du métier.

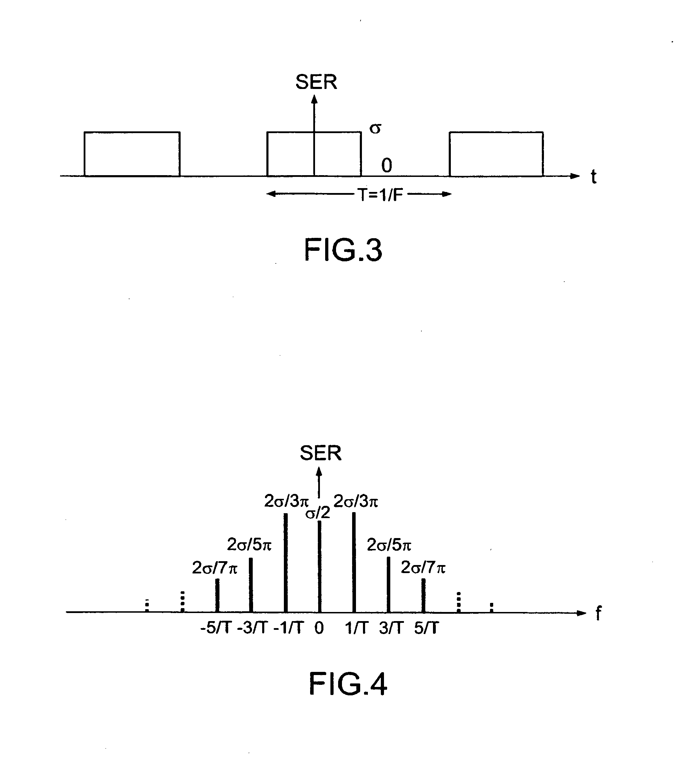

On se réfère à présent à la figure 3. Celle-ci illustre la variation de la surface équivalente radar (SER) de l'antenne ANT selon que le commutateur COM la connecte à l'une ou l'autre des deux lignes hyperfréquences.

A titre d'exemple, cette courbe est obtenue pour une antenne imprimée de forme carrée et de dimensions 9 cm x 9 cm, le gain estimé est de l'ordre de 17 dB (ou 50 en linéaire) pour une émission en bande X, et la surface équivalente radar (SER) correspondante est de l'ordre de σ=0,4 m².

Pour une modulation carrée sur une charge adaptée et un court circuit, à la fréquence F, le spectre de modulation d'amplitude, représenté sur la figure 4, comprend trois composantes :
- une raie à fréquence nulle d'amplitude égale à σ/2=0,2 m², et
- un ensemble de raies symétriques à +(2k+1) F et -(2k+1) F, ayant pour amplitude : σ.[sin(n.π/2)]/(n.π/2).

L'écho reçu par le radar est le signal rétrodiffusé par l'antenne ANT, et est donc modulé en amplitude à la fréquence du signal de modulation.

Cet écho sera détecté par le traitement doppler classique d'un radar MTI, à l'aide d'une transformée de Fourrier numérique par exemple.

La modulation d'amplitude et accessoirement de phase est traduite par le radar MTI par un effet Doppler. Ainsi, même si la cible se déplace à vitesse très faible ou est immobile, le radar MTI pourra analyser l'écho retourné, grâce à l'effet Doppler induit par le système et simulant une certaine vitesse.

Les utilisations d'un système selon l'invention sont diverses.

Il peut être monté au sein de balises de localisation avec une référence de la distance, à très faible coût.

L'invention permet également la détection et la localisation très précise de cibles coopératives, même à vitesse relative nulle, grâce à un dispositif très simple et très léger porté par ces cibles.

En particulier, elle permet la détection et la localisation d'un point de référence parfaitement localisé sur une cible de dimension importante, observé par un radar à très faible distance.

Ces deux dernières fonctions sont intéressantes notamment pour les dispositifs d'aide à l'appontage, en particulier pour les drones, où une détection radar sur l'écho de peau ne permet pas de garantir une précision de localisation suffisante à courte portée, à cause des fluctuations et des déplacements temporels du point brillant.

L'invention peut enfin être réalisée pour différencier des porteurs par empreinte (« fingerprint ») ou réaliser un moyen de communication très simple, d'une cible coopérative vers un émetteur radar.

## Revendications

1. Système de réponse à un signal émis par un radar comprenant
- une antenne (ANT) passive apte à recevoir puis à rétrodiffuser un signal émis par ledit radar,
- un commutateur (COM) de type hyperfréquence relié à ladite antenne,
- au moins deux lignes hyperfréquences (LHF1, LHF2) chacune ayant une impédance distincte et étant connectée au commutateur hyperfréquence, et
- un générateur (GEN) apte à générer un signal de pilotage paramétrable, au commutateur hyperfréquence pour qu'il commute sur l'une ou l'autre des lignes hyperfréquences, de façon à moduler le signal rétrodiffusé par ladite antenne,
**Caractérisé en ce que** deux lignes hyperfréquences successives ont une différence de longueur égale à λ/2, λ étant la longueur d'onde du signal reçu par l'antenne.

2. Système selon la revendication 1, comprenant deux lignes hyperfréquences.

3. Système selon l'une des revendications précédentes, dans laquelle le générateur (GEN) est apte à piloter le commutateur en fonction d'un code prédéfini.

4. Système selon la revendication précédente, dans laquelle ledit générateur (GEN) est apte à piloter le commutateur dynamiquement.

5. Utilisation d'un système selon l'une des revendications précédentes, au sein d'une cible aéroportée coopérant avec ledit radar (RD).

6. Utilisation d'un système selon l'une des revendications 1 à 5, pour calibrer ledit radar (RD).

7. Utilisation d'un système selon l'une des revendications 1 à 5, au sein de balises de localisation.

## Patentansprüche

1. System zum Antworten auf ein von einem Radar ausgestrahltes Signal, das Folgendes umfasst:
- eine passive Antenne (ANT), die zum Empfangen und dann Zurückstreuen eines von dem Radar ausgestrahlten Signals geeignet ist,
- einen mit der Antenne verbundenen Schalter (COM) des Ultrahochfrequenztyps,
- wenigstens zwei Ultrahochfrequenzleitungen (LHF1, LHF2), die jeweils eine getrennte Impedanz haben und mit dem Ultrahochfrequenzschalter verbunden sind, und
- einen Generator (GEN), der zum Erzeugen eines parametrierbaren Steuersignals zu dem Ultrahochfrequenzschalter geeignet ist, damit dieser auf die eine oder die andere Ultrahochfrequenzleitung umschaltet, um das von der Antenne zurückgestreute Signal zu modulieren,
**dadurch gekennzeichnet, dass** die beiden aufeinander folgenden Ultrahochfrequenzleitungen eine Längendifferenz von λ/2 haben, wobei λ die Wellenlänge des von der Antenne empfangenen Signals ist.

2. System nach Anspruch 1, das zwei Ultrahochfrequenzleitungen umfasst.

3. System nach einem der vorherigen Ansprüche, bei dem der Generator (GEN) den Schalter in Abhängigkeit von einem vordefinierten Code steuern kann.

4. System nach einem der vorherigen Ansprüche, bei dem der Generator (GEN) den Schalter dynamisch steuern kann.

5. Verwenden eines Systems nach einem der vorherigen Ansprüche im Innern eines lufttransportierten Ziels, das mit dem Radar (RD) zusammenwirkt.

6. Verwenden eines Systems nach einem der Ansprüche 1 bis 5 zum Kalibrieren des Radars (RD).

7. Verwenden eines Systems nach einem der Ansprüche 1 bis 5 im Innern von Ortungsbaken.

## Claims

1. System for responding to a signal transmitted by a radar comprising:
- a passive antenna (ANT) which is capable of receiving then retrodiffusing a signal transmitted by the radar,
- a commutator (COM) of the hyperfrequency type connected to the antenna,
- at least two hyperfrequency lines (LHF1, LHF2) each having a separate impedance and being connected to the hyperfrequency commutator, and
- a generator (GEN) which is capable of generating a control signal which can be parametrised to the hyperfrequency commutator so that it commutates on one or other of the hyperfrequency lines, in order to modulate the signal retrodiffused by the antenna,
**characterised in that** two successive hyperfrequency lines have a difference in length equal to λ/2, λ being the wavelength of the signal received by the antenna.

2. System according to claim 1, comprising two hyperfrequency lines.

3. System according to either of the preceding claims, wherein the generator (GEN) is capable of controlling the commutator in accordance with a predefined code.

4. System according to the preceding claim, wherein the generator (GEN) is capable of controlling the commutator dynamically.

5. Use of a system according to any one of the preceding claims, within an airborne target which cooperates with the radar (RD).

6. Use of a system according to any one of claims 1 to 5, in order to calibrate the radar (RD).

7. Use of a system according to any one of claims 1 to 5, within location beacons.
